# EUROPEAN PATENT APPLICATION

(11) **EP 4 614 270 A1**
(43) Date of publication of application: **10.09.2025**
(21) Application number: 24161536.8
(22) Date of filing: 05.03.2024
(51) Int. Cl.: G05D 1/222, G05D 105/22, G05D 107/13, G05D 109/10, B62D 15/02, H04W 12/00

(54) **VEHICLE SUMMON SYSTEM, METHOD AND VEHICLE INCORPORATING SAME**

(71) Applicant: Aptiv Technologies AG, 8200 Schaffhausen (CH)
(72) Inventor: CIESLAR, Dariusz, 30-707 Kraków (PL); JANIK, Nikodem, 30-707 Kraków (PL); ZYCH, Krzysztof, 30-707 Kraków (PL)
(74) Representative: Lewis Silkin LLP

(57) **Abstract**

A system, method (20) or vehicle (10) configured for utilising a portable device (16), e.g. mobile phone, to communicate with nodes (12a-f) installed at the vehicle (10). A relative location of the portable device (16) is determined (23), via the communication nodes, which ultimately initiates autonomous driving (25) of the vehicle toward the portable device location. A path toward the location may be updated (27) in real time if the portable device is moved.

## Description

### Introduction

The present disclosure relates to a system for summoning a vehicle, by a user that is external to the vehicle.

### Background

Many vehicles presently offer enhanced parking features. For example, a limited forward and/or backward movement may be remotely activated to enable an empty vehicle to enter into or exit from a tight parking space where access to a door by the driver is obscured. In a related example, a "vehicle summon" function may enable the vehicle to drive autonomously over a short distance, such as from a parking space toward the waiting position of a user at a roadside, in the manner of a valet. Such functions may be operated from a key fob and/or as part of phone-as-a-key (PaaK) solutions where a smart phone may be enabled with unlocking and activation of the limited self-drive functions.

Demand for such vehicle features is growing, for the purpose of enhancing user experience, convenience and safety.

### Summary

The present disclosure seeks to provide a vehicle summon system offering improved user experience, e.g. by enabling greater security and/or convenience or, at the least, providing the public and manufacturers with an alternative to known solutions.

According to a first aspect, a vehicle summon system is provided according to claim 1.

The system may comprise: a portable electronic device, e.g. for carrying by a user; a communication device configured to detect and determine a relative location of the portable electronic device; the system being configured for establishing wireless communication, via the communication device, with the portable electronic device and controlling the interactions thereof to determine the relative location; preferably authenticating the portable electronic device as authorised to enact the system; and calculating a path toward the relative location.

A controller may be further configured to mobilise the running gear of a vehicle installed with the system, and thereby guide the vehicle along the calculated path toward the portable electronic device, or at least proximate thereto. In this way, the system is particularly useful for implementation into a vehicle that has partial or fully autonomous driving capability, e.g. operable over short ranges, to "summon" the vehicle to a user.

The range may be determined by capabilities of the communication device, e.g. an ultra wide band (UWB) device/transceiver. Alternatively, or in addition, range is preferred to be within eyesight of a user for safe operation. In any event, UWB devices are already known to be installed in modern vehicles, e.g. in connection with proximity unlocking and PaaK-type functions. In alternate forms, other communication methods/wireless protocols may be utilised such as Bluetooth^{™}. In principle, any current or future form of ranging/positioning protocol/function may be successfully implemented, or a combination of devices/sensors employed to accurately determine a portable device relative location, by direct communication between the vehicle's onboard devices and the portable device.

According to the present disclosure, such onboard communication devices/capabilities of the vehicle are given an enhanced role for use in a vehicle summon system.

In this way, available sensors/equipment in a vehicle are utilised without the need for additional or retrofit components. A control unit can be programmed with the required function to utilise the vehicle's resources and an existing portable device such as a smart phone equipped with compatible features, e.g. UWB and PaaK.

In embodiments, the controller/system is configured for continual or periodic communication to determine a current relative location of the portable device and to update/recalculate the path toward said current relative location. In this way, if a user carrying the portable device moves, such as to obtain a more advantageous position (e.g. avoiding a puddle or obstacle), then the vehicle is able to be summoned to the updated location.

A vehicle implementing the system is outlined by claim 7. In one form, the vehicle comprises: at least one communication device configured for wireless communication with an external portable electronic device; and a processor configured for: establishing and/or controlling wireless communication between the at least one communication device and the portable electronic device; determining a location of the portable device, relative to the vehicle (e.g. upon receipt of a command issued by the portable device); calculating a path toward the relative location; mobilising running gear of the vehicle, to thereby guide the vehicle along the path toward the portable electronic device.

In this way, the vehicle is able to be summoned (e.g. autonomously driven) to a position at or proximate the portable device. The target location may be offset from the portable device. In this way, the user may be provided convenient access to a driver's door opening means.

The vehicle preferably comprises sensors for capturing data of external environmental conditions, so as to implement collision avoidance during summoning.

Two principle use scenarios/implementations are envisaged by the present disclosure. Firstly, where a car is parked in a tight parking space making it difficult to enter the car conveniently or manoeuvre out of the parking space, the system enables the user to gain access to the vehicle. Secondly, where the vehicle effectively has an automated parking valet feature or a trained parking feature. In this latter case, the disclosure accounts for when the driver/owner may not be standing precisely in a designated/rendezvous (e.g. pre-learned) spot or the driver/owner's position cannot be precisely determined, e.g. using a global navigation satellite system (GNSS). The present system discloses a means for the vehicle to safely travel to a user over a short distance, with greater accuracy than a GNSS solution.

According to the present disclosure, the secured short-range summon feature of a vehicle ensures that the vehicle can unlock and position itself precisely where a driver can reach a driver door by hand. Such functionality may be embodied by one or more of the following:
i) Authentication of an owner's smart phone (e.g. as part of a PaaK system) or equivalent smart key/mobile device with compatible communication protocol carried by a user;
ii) Determination of the owner's position, using the portable device as a proxy for that position, relative to a vehicle coordinate system, e.g. via ultra-wide band transceivers where position is found by triangulation/trilateration of distances between the phone and a set of nodes installed in a vehicle. In the case of trilateration (multilateration), each transceiver gives a distance to the phone. The location of the phone is estimated as that which fits best the ranges. At least three transceivers are needed to establish estimation. In the case of triangulation, a transceiver is capable of measuring the distance and the direction (azimuth) of the phone, where this measurement is called Angle of Arrival (AoA). Two distances + one AoA measurement is sufficient to estimate the location of the portable device. In another form, a combination of AoA, distance, inertial measurement unit (IMU) indication and/or limited field of view would allow the use of one transceiver to obtain an external portable device (phone) location, e.g. in a front half-circle of the vehicle;
iii) Functions may be subject to proposed distance (e.g. only works up to 8-10 meters) and/or supervisory (e.g. supervised by the owner during operation) limitations;
iv) Parking automation option allowing closed loop control at low speeds, and with full steering capability, where the vehicle may follow a moving user based on the current/updated/determined location of the mobile device.

The present disclosure considers integration of the above capabilities into an active vehicle relocation function using a rendezvous spot and position, e.g. determined by an algorithm using UWB positioning of an authenticated phone and environment perception based on safety sensors (e.g. selected from but not limited to ultrasound sensors, radars, vision, birds-eye-view cameras and relevant obstacle perception algorithms) to prevent collision with other vehicles or obstacles.

In a particular implementation, the system may enable automated driving in a straight line and stopping at an actively calculated rendezvous point. In other forms, the system may utilise a PaaK system and parking automation system; e.g. where there is no need of full instrumentation for high speed L2+ (level two plus autonomy in a vehicle), highway or urban pilot.

In a broad sense, the inventive concept recognises using already available sensors/functional devices on a vehicle (e.g. an OEM vehicle as supplied to a customer) to perform additional tasks,

As mentioned, with regard to a second aspect, the disclosure proposes a vehicle fitted with at least one sensor, detection or communication device configured to determine the location of a mobile/portable electronic device, as carried by a user, relative to the vehicle. The vehicle comprises a processor or control unit which may be configured for establishing a connection with the mobile device, authenticating same, waking the vehicle from a standby mode, determining or at least estimating a location of the mobile device, activating a running gear of the vehicle and guiding the vehicle to the position of the portable electronic device. Particularly, following detecting a location of the mobile device, a path is calculated to a rendezvous point (i.e. target or destination) determined based on phone's position. In this way, according to one example, at least a passenger or driver's door of the vehicle may become accessible to a user, where it was previously obscured.

In embodiments, the processor is configured for actively, e.g. continuously or at time intervals, determining a current location of the mobile device and updating the rendezvous point and path thereto.

According to a third aspect, there is provided a method of summoning a vehicle according to claim 11. The method may comprise: establishing wireless communication between a communication device onboard a vehicle and a portable electronic device external to the vehicle; authenticating the portable electronic device as authorised to summon the vehicle; determining a target location of the portable device relative to the vehicle; and autonomously driving the vehicle toward the target location in response to a summon command issued by the portable electronic device. In a particular form, the target location is updated over time, to reflect the current location of the portable electronic device.

Location may be determined by trilateration or equivalent method of finding a relative location/coordinate. It is noteworthy that authorisation may comprises biometric, password and/or other security features available to the portable device. In this way, a summon and unlock feature could not be activated by an unauthorised person.

According to a fourth aspect, there is provided a non-transitory computer readable medium including instructions, which when executed by one or more processors, implement the foregoing method of the third aspect. According to a further aspect, there is provided a computer software product including instructions which, when executed by one or more processors, implement the above method.

### Brief Description of Drawings

Illustrative embodiments will now be described with reference to the accompanying drawings in which:
Figure 1 illustrates a vehicle incorporating a system according to the disclosure;
Figure 2 illustrates a block diagram of one implementation of system according to the invention; and
Figure 3 illustrates an example of a vehicle, fitted with the system, in use.

### Detailed Description

The following description presents exemplary embodiments and, together with the drawings, serves to explain principles of the invention. However, the scope of the invention is not intended to be limited to the precise details of the embodiments or exact adherence with all system features and/or method steps, since variations will be apparent to a skilled person and are deemed also to be covered by the description. Terms for components used herein should be given a broad interpretation that also encompasses equivalent functions and features.

In some cases, several alternative terms (synonyms) for structural and/or system features have been provided but such terms are not intended to be exhaustive. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Any directional terms such as "forward", "backward", "vertical", "horizontal", "up", "down", "sideways", "upper" and "lower" are used for convenience of explanation usually with reference to the form shown in illustrations and are not intended to be ultimately limiting if an equivalent function can be achieved with an alternative dimension and/or direction. All directional terms are relative to each other.

The description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

It will be understood that the illustrated embodiments show applications only for the purposes of explanation. In practice, the invention may be applied to many different configurations, where the embodiment is straightforward for those skilled in the art to implement.

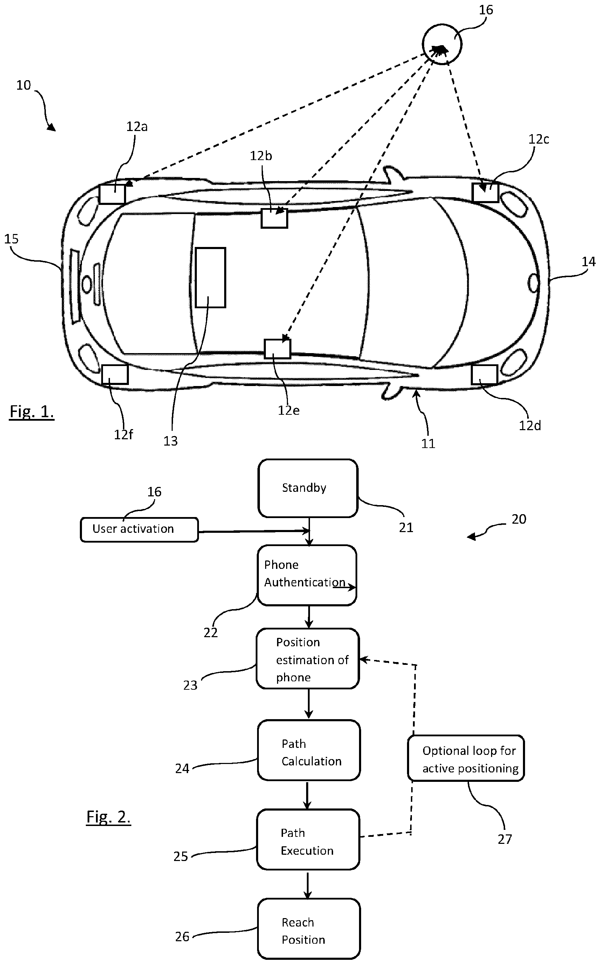

An example vehicle configured to operate in accordance with a system/method as disclosed herein is shown by Figure 1. The system is generally adapted for summoning a vehicle, e.g. over a short range, by a user that is external to the vehicle at the time the vehicle is summoned.

The vehicle is generally denoted 10 and, for the purposes of explanation of the present summon system, comprises a perimeter 11, one or more communication devices or nodes 12(a-f) and a controller 13, e.g. an electronic control unit that is configured for utilising the communication devices onboard the vehicle 10. In the illustrated form, there are six communication devices/nodes including two devices proximate each of front 14 and rear 15 bumpers (e.g. 12c, 12d on each side of front bumper 14 and 12a, 12f on each side of rear bumper 15 - four in total), and one device on each side of the vehicle, e.g. proximate a door handle, namely a left side device 12b and right side device 12e, relative to a forward direction of travel.

External to the vehicle 10, outside perimeter 11, a portable communication device 16 may be located, e.g. a smart phone or equivalent device, compatible with the communication protocol of the communication devices 12. The portable device 16 defines a proxy location for a vehicle user, e.g. a driver, when located outside of the vehicle.

In a particular embodiment, the communication devices 12 are UWB devices and the portable device 16 is enabled for communicating with such devices. In this way, the vehicle controller 13 can communicate with the portable device 16, via one or more fixed-on-vehicle devices 12, such as for identifying said device 16 and determining its location relative to vehicle 10. Dotted arrows 17 represent two-way wireless communication and distance measurements so that the spatial location of device 16, and hence an authorised vehicle operator or the like, can be determined.

Further operation of the system is best explained by reference to Figure 2, which illustrates a block diagram of the summoning method 20.

In a first state 21, the vehicle may be in a standby mode, e.g. when it is parked/stationary in a parking space. At portable device 16, a user may initiate vehicle activation, e.g. for the purposes of "summoning" the vehicle from its parking spot. A signal is sent from the portable device 16 to the controller 13, e.g. via communication devices 12.

In a second step 22, the user's device 16 may be authenticated, i.e. to verify that it is associated with the owner, and therefore authorised to wake up the vehicle and activate its movement.

If summoning has been requested from device 16 (e.g. in addition to an unlocking function), at step 23 controller 13 now calculates/estimates/determines the location of the device 16, e.g. via trilateration or an equivalent process, utilising the vehicles sensors/devices 12.

Once the location is known, generally within an accuracy greater than GPS capability, e.g. by virtue of the UWB communication, step 24 represents calculating a path from the stationary location, e.g. parking space, toward the portable device. The calculation may account for orientation of the device, user and/or vehicle. Preferably the target/destination at the terminus of the path will be a convenient position for a user to access a door into the vehicle, e.g. proximate device 12b or 12e.

The system may report to the user, via device 16, that it is ready to activate/be summoned which could require an additional confirmation step. In any event, step 25 represents path execution where the vehicle running gear is activated via controller 13 and movement commences, comprising forward or reverse motion dependent on the relative location and orientation of the vehicle in its parking space.

Step 26 represents termination of the summon function, where the calculated path has been executed to completion. The doors may already be unlocked or unlock upon completion depending on preference of the user. The user may now enter the vehicle, such as to take manual control or initiate other autonomous functions.

An optional function is represented by block 27, namely a loop during path execution 25 and determining the location of the portable device at step 23. Such a loop enables continuous or periodic recalculation of the path based upon an updated/detected location of the portable device. In other words, the system allows for deviation of the destination in the event that the user moves, such as to account for a new condition/observation. In this mode (which could be disabled/selected by the user from device 16 if desired), the vehicle may follow the user at a safe speed/minimum distance.

It is noteworthy that all movement operations of the vehicle take place at relatively low speed. Furthermore, the operational range will generally be limited to under approximately ten meters and/or within line of sight. In this way, the user may maintain oversight of the vehicle's movement and could override/stop the summoning process at any time.

It will be apparent that the summoning calculations may take advantage of steering functions of the vehicle, in order to result in the most convenient position for door access, etc.

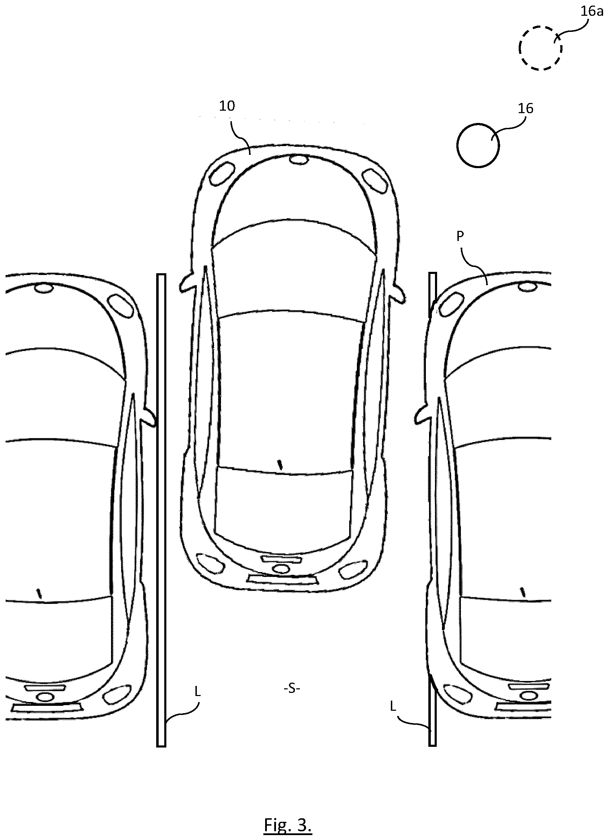

Figure 3 pictorially illustrates some of the concepts outlined in the steps of Figure 2, namely autonomous summoning of a vehicle 10 from a parking space S, defined by barrier lines L, toward a user/device 16. In the particular example shown, a parked vehicle P on the right is parked over a parking space barrier line L, making access to a door of the vehicle tight and inconvenient. Therefore, summoning is necessary. Furthermore, the user carrying device 16 has decided to move further from parking space S to a second location 16a and, thus, the path of vehicle 10 has slightly adjusted in accordance with block 27 and turned toward the user/device 16a.

A number of extended features may be incorporated into the system disclosed herein. For example:
- Driver's settings (e.g. seat positions and mirror angles/preferences) may be adjusted to a user profile while the vehicle travels to the rendezvous spot feature;
- As the last phase of a trained parking manoeuvre or the pick up phase of an automated parking valet function:
   o the vehicle may determine a rendezvous spot based on the authentication of an owner's phone (e.g. phone-as-key setup) and UWB localization (e.g. up to 8-10m);
   o the vehicle may execute parking manoeuvres to position itself according to that actively determined rendezvous spot;
- The vehicle may utilise the same system functionality to relocate itself at a desired relative position (rendezvous spot) to a UWB node other than (i.e. different to) the owner's personal activation device, e.g. a node installed at a vehicle charger in a garage. In this case, the desired position can therefore be determined independently of external perception sensors (e.g. radar, vision, ultrasound, bird-eye view);
- Driver's phone/device position may be determined by UWB system that can be additionally validated by perception sensors (e.g. radar, vision) and relevant algorithms.

The following benefits are evident in a system as disclosed herein:
- Rendezvous location and orientation may be actively determined based on the determined/known location of owner's mobile device, e.g. by UWB system;
- For maximum convenience, the rendezvous location and desired orientation can be actively controlled/adjusted by the driver by moving the phone or equivalent mobile device;
- Enhancement of trained parking/automated parking valet feature by an actively determined rendezvous location and orientation once driver's device is within range of UWB system;

By way of summary, the present disclosure outlines a system and method for summoning a vehicle, along with a vehicle configured for performing a summon function. Embodiments comprise: use of a portable electronic device; a communication device or node for installation at a vehicle; a controller or processor configured for: establishing wireless communication with the portable electronic device, via the communication device or node; verifying the portable electronic device as an authorised device associated with the vehicle; determining a relative location of the portable device, via the communication device or node; calculating a path toward the relative location; and activating running gear of the vehicle to autonomously execute the path.

The inventive concept may also be summarised as a system, method or vehicle configured for utilising a portable device, e.g. mobile phone, to communicate with nodes installed at the vehicle. A relative location of the portable device is determined, via the communication nodes, which ultimately initiates autonomous driving of the vehicle toward the portable device location. A path toward the location may be updated in real time if the portable device is moved.

## Claims

1. A system for summoning a vehicle, the system comprising:
a portable electronic device;
a communication device or node for installation at a vehicle;
a controller configured for:
establishing wireless communication with the portable electronic device, via the communication device or node;
verifying the portable electronic device as an authorised device associated with the vehicle;
determining a relative location of the portable device, via the communication device or node;
calculating a path toward the relative location; and
activating running gear of the vehicle to autonomously execute the path.

2. The system according to claim 1, wherein there are a plurality of communication devices or nodes, enabling determination of the relative location of the portable device by measuring distance thereto.

3. The system according to claim 2, wherein the plurality of communication devices or nodes comprise ultra-wide band, UWB, devices, and the portable electronic device is compatible with UWB communication.

4. The system according to any preceding claim, wherein the controller is further configured to track any movement of the portable device to determine a current relative location thereof and update the path calculation.

5. The system according to any preceding claim, wherein the path calculation adjusts for orientation of the vehicle and/or portable device.

6. The system according to any preceding claim, wherein the controller is further configured to relocate the vehicle to a desired location relative to a device/node other than the portable device.

7. A vehicle configured for being summoned by a user, the vehicle comprising:
at least one communication device or node configured for wireless communication with an external portable electronic device; and
a processor configured for:
establishing and/or controlling wireless communication between the at least one communication device or node and the portable electronic device;
determining a location of the portable device, relative to the vehicle;
calculating a path toward the relative location;
mobilising a running gear of the vehicle, guiding the vehicle along the path toward the portable electronic device.

8. The vehicle according to claim 7, wherein there are a plurality of communication devices or nodes.

9. The vehicle according to claim 8, wherein the plurality of communication devices or nodes comprise ultra-wide band, UWB, devices.

10. The vehicle according to any preceding claim 7 to 9, wherein the processor is further configured to track any movement of the portable device, via the wireless communication, to determine a current relative location thereof and update the path calculation.

11. A method of summoning a vehicle, comprising the steps of:
establishing wireless communication between a communication device or node fitted to vehicle and a portable electronic device external to the vehicle;
authenticating the portable electronic device as authorised to summon the vehicle;
receiving a summon command from the portable
determining a target location of the portable device relative to the vehicle;
autonomously driving the vehicle toward the target location in response to a summon command issued by the portable electronic device.

12. The method of claim 11, wherein autonomous driving of the vehicle is terminated at a location where at least at a door of the vehicle is accessible to a user carrying the portable electronic device.

13. The method of claim 11 or 12, wherein the target location is updated over time, to reflect the current location of the portable electronic device.

14. The method of any of claims 11 to 13, wherein there are a plurality of communication devices or nodes fitted to the vehicle.

15. A non-transitory computer readable medium including instructions, which when executed by one or more processors, implement a method according to any of claims 11 to 14.
